# EUROPÄISCHE PATENTSCHRIFT

(11) **EP 1 353 992 B1**
(45) Veröffentlichungstag und Bekanntmachung des Hinweises auf die Patenterteilung: **09.02.2005**
(21) Anmeldenummer: 01272635.2
(22) Anmeldetag: 05.12.2001
(51) Int. Cl.: C08K 5/3445, C08K 5/3435, C08K 5/19, C08K 5/49, C08K 5/50, C08L 33/14

(54) **NEUARTIGE POLYMERBINDERSYSTEME MIT IONISCHEN FLÜSSIGKEITEN**
NOVEL POLYMER BINDER SYSTEMS COMPRISING IONIC LIQUIDS
NOUVEAUX SYSTEMES DE LIANTS POLYMERES COMPORTANT DES LIQUIDES IONIQUES

(30) Priorität: 08.01.2001 DE 10100455
(43) Veröffentlichungstag der Anmeldung: 22.10.2003
(73) Patentinhaber: Creavis Gesellschaft für Technologie und Innovation mbH, 45772 Marl (DE)
(72) Erfinder: SCHMIDT, Friedrich, Georg, 45721 Haltern (DE)
(86) Internationale Anmeldenummer: PCT/EP2001/014237
(87) Internationale Veröffentlichungsnummer: WO 2002/053636

(56) Entgegenhaltungen:
- EP-A- 0 222 579
- EP-A- 0 290 676
- US-A- 3 579 613
- US-A- 4 596 668
- US-A- 4 943 380
- US-A- 5 304 400

## Beschreibung

Die Erfindung betrifft Stoffgemische aus Polymeren und ionischen Flüssigkeiten.

Viele Polymere wie z.B. verschiedene Polyaramide, Ionomere, Polyester, Polyamide, Polyether(Ether)ketone können nur mit bestimmten Verfahren bzw. nur mit Schwierigkeiten verarbeitet werden. Zum Teil ist die thermoplastische Verarbeitung der Polymermaterialien als solche überhaupt nicht möglich, ohne daß eine Zersetzung der Polymerkette auftritt.

Eine Verarbeitbarkeit von Polymeren wird vielfach nur durch Einmischen von Weichmachern ermöglicht.

Für den Hochtemperatur-Bereich sind viele Weichmacher nicht geeignet. Dies liegt z. B. an einer zu hohen Flüchtigkeit der Weichmacher, oder an Inkompatibilitäten mit dem Polymer.

Insbesondere für Polymere, die ionische Gruppen tragen, können häufig geeignete, nicht korrosive Weichmacher, die die Leitfähigkeit nicht oder nur positiv beeinflussen, nicht gefunden werden.

### Stand der Technik:

In der Literatur wird ein Gemisch aus Cellulose und einer Salzhydratschmelze aus Indicas LiClO₄/LiJ. xH₂O bzw. LiClO₄/Mg(ClO₄)₂.xH₂O beschrieben, bei dem die Cellulose angequollen bzw. auch gelöst vorliegt und die regenerierte Cellulose auf ihre, von der Zusammensetzung der zuvor hergestellten Lösung abhängige, Kristall-Struktur hin untersucht wird. (Fischer,S. et al. ACS Symp.Ser.(1999) 737, 143).

Auch Polymerextraktionen mit bei Raumtemperatur geschmolzenen Chloroaluminat-Salzen werden in der Literatur beschrieben ( Wilkes, John S. et al, Proc.-Electrochem.soc (2000), 99-41 (Molten Salts XII) 65 ; Proc.-Electrochem.Soc.(2000), 99-41(Molten Salts XII), 65).

Diese Veröffentlichungen beschreiben somit ein Gemisch aus Polymeren (Cellulose) und anorganischen Salzen bzw. einer anorganisch-ionischen Füssigkeit.

Gel-Elektrolyte können nach z.B. Fuller et al. (J.Electrochem. Soc. (1997), 144(4), L67 und J.Electroanal.Chem. (1998) 459(1),29) aus fluorierten Copolymeren (Polyvinylidenfluoridhexafluoropropylcopolymeren) und ionischen Flüssigkeiten auf Basis von Imidazolium-derivaten mit Triflat- bzw. Tetrafluoroborat - Gegenionen hergestellt werden.

Die folgenden Publikationen beschreiben Gemische aus Polymeren und ionischen Verbindungen (Flüssigkeiten), wobei die Polymere entweder nicht funktionalisiert sind, oder mit Gruppen funktionalisiert sind, die eine weitere Salz-/Ionenbildung nicht gestatten. Diese Polymeren besitzen daher keine äussere Ladung.

In JP 10265673 wird die Herstellung von polymeren festen Elektrolyten durch Verfestigung von ionischen Flüssigkeiten mittels z.B. Polymerisation von Hydroxyethylmethacrylat und Ethylenglykoldimethacrylat in Gegenwart der ionischen Flüssigkeiten beschrieben. Der so erhaltene Film zeigt Ionenleitfähigkeit.

Noda et al. beschreiben in Electrochim. Acta (2000), 45(8-9), 1265, dass bestimmte Vinylmonomere in bei Raumtemperatur flüssigen Salzschmelzen aus 1-Ethyl-3-methylimidazolium Tetrafluoroborat bzw. 1-Butylpyridinium Tetrafluoroborat polymerisiert werden können und transparente, hochleitfahige und mechanisch stabile Polymerelektrolyt-Filme ergeben.

In JP 10265674 werden Komposite aus Polymeren z.B. Polyacrylnitril oder Polyethylenoxid und ionischen Flüssigkeiten beschrieben. Die ionischen Flüssigkeiten sind aus Li-Salzen (z.B. Li BF₄) oder cyclische Amidine oder Onium-Salze des Pyridins (z.B. 1-Ethyl-3-methylimidazolium tetrafluoroborat) aufgebaut. Als Verwendung werden feste Elektrolyte, antistatische Agentien und Abschirmungen angegeben.

Fuller et al. (Molten Salt Forum (1998),5-6 (Molten Salt Chemistry and Technology 5), 605) berichten von Mischungen aus ionischen Flüssigkeiten oder anderen Imidazoliumsalzen mit Polymeren. Diese Blends zeigen hohe Leitfähigkeit, thermische Stabilität etc. für Anwendungen in Batterien, Brennstoffzellen oder kapazitiven Einheiten als hochleitfähige Polymerelektrolyte.

Humphrey et al. (Book of Abstracts, 215^{th} ACS National Meeting, Dallas. March 29-April 2 (1998), CHED-332, ACS, Washington D.C.) beschreiben die Lösung und Extraktion von Polymeren mit bei Raumtemperatur flüssigen Salzschmelzen aus Aluminiumchlorid und einem organischen Chlorid-Salz . Die ionischen Flüssigkeiten sind bzgl. ihrer Lewis-Acidität einstellbar und werden durch Zugabe von Chlorwasserstoff zu Supersäuren.

Watanabe et al. (Solid State Ionics (1996), 86-88(Pt.1),353) beschreiben, dass bei Temperaturen unter 100°C flüssige Salzmischungen aus Trimethylammoniumbenzoat, Lithium-Acetat und Lithium-Bis(trifluoromethylsulfonyl)imid mit Polyacrylnitril und Polyvinylbutyral kompatible Mischungen ergeben, die die Herstellung von Filmen erlauben.

Ogata et al. berichten (Synth.Met.(1995),69(1-3), 521) über Mischungen von Polykation-Salzen (z.B. Poly(1-butyl-4-vinylpyridium)-Bromid, 1,6-Hexandichlorid-N,N,N'N'-tetramethyl-1,3-propylendiamincopolymer) mit Aluminiumchlorid enthaltenden Salzschmelzen. Die Mischungen ergeben viscoelastische Filme und zeigen höhere und weniger temperaturabhängige Leitfähigkeiten als Polyethylenoxid-basierte Polymerelektrolytsysteme. Gleiches wird von Rikukawa et al. mit Salzen aus Aluminiumchlorid und 1-Butylpyridinium Salzen (Mater.Res.soc.Symp.Proc.(1993), 293(Solid State Ionics III),135) berichtet.

Für viele Anwendungen wäre es wünschenswert, hohe Leitfähigkeiten des Polymeren zu erhalten; dies ist mit den vorbeschriebenen Systemen nicht oder nicht ausreichend möglich.

Aufgabe der vorliegenden Erfindung war es daher, Polymersysteme im Gemisch mit ionischen Flüssigkeiten bereitzustellen, die eine gute Leitfähigkeit bei gleichzeitiger guter Verarbeitbarkeit und Herstellbarkeit besitzen.

Überraschend wurde gefunden, dass Polymere mit ionischen bzw. stark polaren Monomerstrukturen durch den Zusatz von ionischen Flüssigkeiten z.B. in ihren elektrischen Eigenschaften und ihrer Verarbeitbarkeit verbessert werden können.

Gegenstand der vorliegenden Erfindung sind daher Stoffgemische, die ein oder mehrere durch Sufonat-, Carboxylat- oder quartäre Aminogruppen funktionalisierte (Meth)acrylatpolymere und eine ionische Flüssigkeit enthalten.

Die erfindungsgemäßen Stoffgemische können ein oder mehrere Polymere, sei es als Blend, Copolymer oder physikalisches Gemisch enthalten.

In einer besonderen Ausführungsform der vorliegenden Erfindung ist das (Meth)acrylatpolymer ein Copolymer aus mindestens einem (Meth)acrylatmonomer und mindestens einem olefinisch ungesättigten Monomeren.

Hier sind verschiedene Varianten der Erfindung möglich, wobei das olefinisch ungesättigte Monomer durch Carboxyl-, Carboxylat-, tert. Amino-, quartäre Amino-, Sulfonat- und/oder Sulfonsäuregruppen funktionalisiert sein kann.

Unter ionischen Flüssigkeiten ("ionic liquids") versteht man bei niedrigen Temperaturen flüssige Salze. Sie stellen eine neuartige Klasse von Lösungsmitteln mit nicht-molekularem ionischem Charakter dar. Im Gegensatz zu klassischen Salzschmelzen, die hochschmelzende, hochviskose und sehr korrosive Medien darstellen, sind ionische Flüssigkeiten bereits bei niedrigen Temperaturen (<80 °C) flüssig und relativ niedrig viskos. [K.R. Seddon, J. Chem. Technol. Biotechnol. 1997, 68, 351-356; K.R.Seddon, Kinet. Catal. 1996, 37, 693-697)

Aus WO 00/20115 und WO 00/16902 sind ionische Flüssigkeiten (IL) im Bereich der Katalyse seit einigen Jahren bekannt. Ionische Flüssigkeiten sind Salzschmelzen, die vorzugsweise erst bei Temperaturen unterhalb von Raumtemperatur erstarren. Einen allgemeinen Überblick zu diesem Thema findet man z.B. bei Welton (Chem. Rev. 1999, 99, 2071). Im wesentlichen handelt es sich dabei um Imidazolium- oder Pyridiniumsalze.
Die erfindungsgemäßen Stoffgemische enthalten bevorzugt als ionische Flüssigkeit ein Salz mit einem Kation, ausgewählt aus der Gruppe Imidazolium-Ion, Pyridinium-Ion, Ammonium-Ion oder Phosphonium-Ion gemäß den nachfolgenden Strukturen, 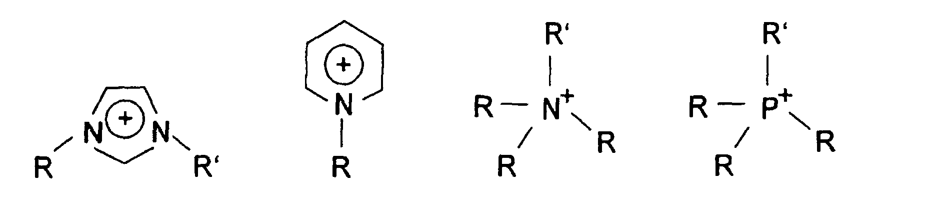 wobei R, R' = H, gleiche oder unterschiedliche Alkyl-, Olefin- oder Aryl-Gruppen mit der Maßgabe, dass R und R' unterschiedliche Bedeutungen besitzen und einem Anion aus der Gruppe der BF₄⁻-Ionen, Alkyl-Borat-Ionen, BEt₃Hex-Ionen mit Et = Ethyl-Gruppe und Hex = Hexyl-Gruppe, Halogeno-Phosphat-Ionen, PF₆⁻ -Ionen, Nitrat-Ionen, Sulfonat-Ionen, Alkyl- bzw. Aryl-Sulfonat-Ionen, Hydrogensulfat-Ionen, Chloroaluminat-Ionen.

Eine Grenzziehung zwischen Salzschmelzen und ionischen Flüssigkeiten bei einer Schmelztemperatur von 80 °C läßt sich durch die sprunghafte Verbesserung der Anwendungsbreite flüssiger Salze unterhalb dieser Temperatur rechtfertigen: Auch wenn einige Beispiele bekannt geworden sind, in denen Hochtemperatur-Salzschmelzen erfolgreich als Reaktionsmedien in synthetischen Anwendungen eingesetzt wurden, [ a) W. Sundermeyer, Angew. Chem. 1965, 77, 241-258; Angew. Chem. Int. Ed.Engl. 1965, 4, 222-329; b) W. Sundermeyer, Chemie in unserer Zeit 1967, 1,150-157; c) S.V. Volkov, Chem. Soc. Rev. 1990, 19, 21-28.] erlaubt doch erst ein Flüssigkeitsbereich bis unter 80 °C die vielfältige Substitution konventioneller, organischer Lösungsmittel durch ionische Flüssigkeiten.

Obwohl einige Vertreter bereits seit 1929 bekannt sind, werden ionische Flüssigkeiten erst in den letzten 15 Jahren intensiv als Lösungsmittel für chemische Umsetzungen untersucht. Die seither erschienenen Veröffentlichungen belegen, daß der Ersatz organischer Lösungsmittel durch eine ionische Flüssigkeit zu bemerkenswerten Verbesserungen in synthetischen und katalytischen Anwendungen bezüglich Reaktivität und Selektivität führen kann [T. Welton, Chem. Rev. 1999, 99, 2071-2083 ]. Beispiele dafür sind die veröffentlichten Arbeiten zur Friedel-Crafts-Alkylierung [K.R. Seddon, J. Chem. Technol. Biotechnol. 1997, 68, 351-356; K.R.Seddon, Kinet. Catal. 1996, 37, 693-697] und Friedel-Crafts-Acylierung, [W. Sundermeyer, Angew. Chem. 1965, 77, 241-258; Angew. Chem. Int. Ed.Engl. 1965, 4, 222-329; W. Sundermeyer, Chemie in unserer Zeit 1967, 1,150-157; S.V. Volkov, Chem. Soc. Rev. 1990, 19, 21-28.] zu unterschiedlichen Hydrierungen, [T. Welton, Chem. Rev. 1999, 99, 2071-2083] Hydroformylierungen, [H. Waffenschmidt, P. Wasserscheid, D. Vogt, W. Keim, J. Catal. 1999, 186, 481; H. Waffenschmidt, P. Wasserscheid, W. Keim, Deutsche Patentanmeldung 19901524.4, 1999; V.R. Koch, L.L. Miller, R.A. Osteryoung, J. Am. Chem. Soc. 1976, 98, 5277-5284; A.A.K. Abdul-Sada, M.P. Atkins, B. Ellis, P.K.G. Hodgson, M.L.M. Morgan, K.R. Seddon (BP Chemicals), WO 95/21806, 1995 [Chem. Abstr. 1996, 124, P8381z]; F.G. Sherif, L-J. Shyu, C.C. Greco, A.G. Talma, C.P.M. Lacroix (Akzo Nobel N. V.), WO 9803454 A1, 1998 [Chem. Abstr. 1998, 128, P140512e]] sowie zur Heckreaktion [C.J. Adams, M.J. Earle, G. Roberts, K.R. Seddon, Chem. Commun. 1998, 2097-2098] und zu Oligomerisationsund Polymerisations-reaktionen [Ellis, W. Keim, P. Wasserscheid, Chem Comm. 1999,337-338; Y. Chauvin, L. Mußmann, H. Olivier, Angew Chem. 1995, 107, 2941-2943 ; Angew. Chem. Int. Ed. Engl. 1995, 34, 2698-2700 ; P.A.Z Suarez, J.E.L.Dullius, S. Einloft, R.F. de Souza, J. Dupont, Inorg. Chim. Acta 1997, 255, 207-209 ; P.A.Z. Suarez, J.E.L. Dullius, S. Einloft, R.F. de Souza, J. Dupont, Polyhedron, 1996, 15, 1217-1219.] in denen ionische Flüssigkeiten mit Erfolg als Katalysatoren oder als Lösungsmittel für die Reaktionen eingesetzt werden. Dabei können durch die Wahl verschiedener Kationen und Anionen die chemischen und physikalischen Eigenschaften der verwendeten ionischen Flüssigkeiten für die jeweilige Anwendung optimiert werden. Aus diesem Grund werden ionische Flüssigkeiten auch als "designer solvents" bezeichnet. [G.W. Parshall, J. Am. Chem. Soc. 1972, 94, 8716-8719; b) N. Karodia, S.Guise, C. Newlands, J.-A. Andersen, Chem. Commun. 1998, 2341-2342; c) Y. Chauvin, H. Olivier, L. Mußmann, FR 95/14,147, 1995 [Chem. Abstr. 1997, 127, P341298k]].

Mit vielen organischen Produktgemischen bilden ionische Flüssigkeiten zwei Phasen. Die mehrphasige Reaktionsführung ermöglicht in diesen Fällen eine einfache Produktabtrennung und Rezyklierung des homogenen Katalysators. Der praktisch nicht vorhandene Dampfdruck ionischer Flüssigkeiten ermöglicht zudem eine destillative Produktabtrennung ohne Azeotropbildung. Der Katalysator wird dabei in einigen Fällen unter den destillativen Bedingungen durch die ionische Flüssigkeit stabilisiert und kann mit nahezu unveränderter Aktivität für weitere Katalysen genutzt werden. [H. Waffenschmidt, P. Wasserscheid, D. Vogt, W. Keim, J. Catal. 1999, 186, 481; H. Waffenschmidt, P. Wasserscheid, W. Keim, DE 1990 1524.

Die im erfindungsgemäßen Stoffgemisch eingesetzten (Meth)acrylatpolymere können auf verschiedene Weise die o. g. funktionellen Gruppen erhalten.
- Funktionalisierung des (Meth)acrylatmonomeren, wobei zur Polymerisation jeweils ein oder mehrere funktionalisierte und unfunktionalisierte Monomere eingesetzt werden.
- Funktionalisierung des olefinisch ungesättigten Monomeren bei Copolymeren.

Ist das (Meth)acrylatpolymer durch tertiäre Aminogruppen funktionalisiert, können die gewünschten quartären Aminogruppen durch Umsetzen dieses Polymers mit einer Säure, bevorzugt mit einer organischen Mono-, Di-, Tri- oder polyfunktionellen Carbonsäure erhalten werden.

Ist das (Meth)acrylatpolymer durch Carboxylgruppen funktionalisiert, können die gewünschten Carboxylatgruppen durch Umsetzen dieses Polymers mit einem Amin, bevorzugt mit einer organischen Mono-, Di-, Tri- oder polyfunktionellen Aminverbindung erhalten werden.

Ist das (Meth)acrylatpolymer durch Sulfonsäuregruppen funktionalisiert, können die gewünschten Sulfonatgruppen durch Umsetzen dieses Polymers mit einem Amin, bevorzugt mit einer organischen Mono-, Di-, Tri- oder polyfunktionellen Aminverbindung erhalten werden.

### Herstellung der erfindungsgemäßen Stoffgemische:

Die Herstellung der erfindungsgemäßen Stoffgemische kann mit den üblichen, dem Fachmann bekannten Verfahren erfolgen; als Beispiele seien hier zu erwähnen:
- Mechanische Blendherstellung durch Vermischung der ionischen Flüssigkeit und der mittels eines Extruders oder Rührbehälters bei angemessenen Temperaturen
- Lösen der in der ionischen Flüssigkeit eventuell bei erhöhten Temperaturen
- Ausfällung der Gemisch-Komponenten aus einer gemeinsamen Lösung durch ein Nicht-Lösemittel oder durch Absenkung der Temperatur
- Aussalzen der Gemisch-Komponenten aus einer gemeinsamen Lösung
- Mischen in einem Rührbehälter mit anschließender Entfernung eines zunächst zugesetzten Lösemittels.

Ein weiterer Gegenstand der Erfindung ist die Verwendung der erfindungsgemäßen Stoffgemische in elektrischen und elektronischen Bauteilen, als leitfähiger bzw. antistatischer Binder oder Kleber, zur Extrusionsverarbeitung oder Spritzgussverarbeitung von Polymeren.

Die erfindungsgemäßen Stoffgemische können in diesen Verwendungen im Gemisch mit anderen Polymeren oder als einziger Stoff eingesetzt werden.

Die erfindungsgemäßen Stoffgemische stellen neuartige leitfähige bzw. antistatisch ausgerüstete Binder- bzw. Klebersysteme dar.

Leitfähige Bindersysteme und Klebstoffe werden nach heutigem Stand durch Zusatz von speziellen Leitfähigkeitsfüllstoffen hergestellt. Antistatik-Ausrüstungen von Formmassen, Lacken, Gummi und Schaumstoffen werden entweder durch Einarbeitung von leitfähigkeitsverbessernden Füllstoffen oder Fasern (Ruß, Grafit) oder niedermolekularen Salzen wie Kaliumformiat erzeugt. Elektrisch leitende Klebstoffe haben sich in der Vergangenheit als Alternative bzw. in Ergänzung zum Weichlöten insbesondere in der Elektronik eingeführt. Als Basispolymere kommen vorwiegend Epoxidharze zum Einsatz ; außerdem sind Klebstoffsysteme auf Cyanacrylat-, Silicon- und Polyimidbasis bekannt. Als leitfähigkeitsanhebende Additive sind auch Gold, Silber, Kupfer oder Nickel in Plättchen- bzw. Flockenform bekannt, ebenso z.B. silber-überzogene Glas-Beads ( EP 0 195 859).

Daneben ist zum Stand der Technik bei leitfähig ausgerüsteten Polymermaterialien für elektronische Anwendungen zu erwähnen, daß es Materialien gibt die entweder über eine Zugabe von intrinsisch leitfähigen Polymermaterialien (z.B. BF4-dotiertes Poly(ethoxythiophen) als Additiv für heißsiegelbare antistatisch ausgerüstete Filme (DE 42 19 410) oder die mit Zusatz von Partikeln oder antistatisch bzw. leitfähig ausgerüsteten Fasern (Acrylatester-Polymer-Emulsionen mit leitfähigen Acrylat-Fasern mit absorbiertem Cu-Salzen (JP 62129371) die Leitfähigkeit des Blends anheben.

In JP 46040419 werden Heißklebemassen beschrieben, die aus Hydroxy-, Carboxy- Epoxy oder Aminogruppen enthaltenden Ethylen-Copolymeren, Isocyanat-Derivaten und bis zu 10 % eines Amin-Salzes, z.B. Hexahydromethylanilin-Acetat oder Zink-N-ethyl-N-phenyldithiocarbamat bestehen und eine geringere Alterung und eine bessere Klebwirkung auch nach Waschen von geklebten Textilien zeigen.

Überraschend wurde gefunden, daß es möglich ist, die verarbeitungstechnischen, elektrischen und thermischen Eigenschaften von Polymeren auf der Basis von (Meth)acrylatcopolymeren oder eines Copolymeren unter Hinzufügung einer ionischen Flüssigkeit, in weitem Rahmen einzustellen.

### • Verarbeitbarkeit

Die Erhöhung der Fließfähigkeit der Schmelzen dieser Polymers ist durch den lösemittelartigen Charakter der Ionischen Flüssigkeiten gegeben, wobei der besondere Vorteil in der Nichtflüchtigkeit der ionischen Flüssigkeiten auch bei den Verarbeitungstemperaturen der Blends besteht. Damit können entweder Verarbeitungstemperaturen verwendet werden, bei denen die bisher verwendeten Weichmacher bzw. Verarbeitungshilfsmittel bereits einen zu hohen Dampfdruck aufweisen und zu Ausgasungen führen oder die Polymere können durch die weichmachende Wirkung bei niedrigeren Temperaturen verarbeitet werden.

### • Elektrische Eigenschaften

Die Anpassung der elektrischen Eigenschaften dieser Polymer-Weichmacher-(Blend)Systeme ist mit Ionischen Flüssigkeiten durch die Einbringung der ionischen Gruppierungen in weiten Bereichen möglich. Damit ist eine antistatische oder zum Teil auch halbleitende Eigenschaft der Polymermaterialien erzeugbar.

### • Fließfähigkeit

Durch den Einsatz der ionischen Flüssigkeiten als Weichmacher wird die Fließfähigkeit der Polymermaterialien im geschmolzenen Zustand erhöht.

### • Klebverhalten

Das Klebverhalten entsprechender Blends aus Polymeren und ionischen Flüssigkeiten zu polaren oder durch die ionischen Flüssigkeiten angequollenen bzw. angelösten Oberflächen wird durch die Anwesenheit von ionischen Gruppierungen verbessert.

Aufgrund ihres nicht-flüchtigen und ionischen Charakters (nicht meßbarer Dampfdruck) und ihren besonderen Löseeigenschaften lassen sich Ionische Flüssigkeiten als Weichmacher bzw. Lösemittel, insbesondere für Polymere oder Substanzen verwenden, die in organischen oder wäßrigen Lösemitteln nicht oder nur ungenügend löslich sind. Werden vemetzte oder vernetzende Polymere im Stoffgemisch eingesetzt, dient die ionische Flüssigkeit ebenfalls als Weichmacher, der die Glastemperatur absenkt

Bei der Spritzgussverarbeitung von Thermoplasten kommt es insbesondere auf eine gute Verarbeitbarkeit der Polymermaterialien an. Diese kann bei der Verwendung von Polymeren mit stark polaren oder ionischen funktionellen Gruppen aufgrund der intra- und intermolekularen Wechselwirkungen eingeschränkt sein. Durch den Einsatz von ionischen Flüssigkeiten als Weichmacher werden die Wechselwirkungen zwischen den polymergebundenen funktionellen Gruppen erniedrigt und damit eine verbesserte Verarbeitbarkeit erreicht.

Bei zu Fasern zu verspinnenden Polymeren kann die ionische Flüssigkeit den Spinnprozess ermöglichen bzw. erleichtern. Aufgrund der Erniedrigung der Schmelzeviskosität durch den Zusatz von Ionischen Flüssigkeiten kann das Verarbeitungsfenster für den Spinnprozess erweitert werden; gleiches gilt für die Folienherstellung oder andere Extrusionsverfahren. Die als weichmachende Verarbeitungshilfsmittel enthaltenen ionischen Flüssigkeiten können, sofern sie mit Wasser oder einem anderen mit dem Polymer unverträglichen Lösemittel mischbar sind, auch nach der Verarbeitung aus den Polymeren wieder extrahiert werden, wodurch Struktur und Eigenschaften des Polymers verändert werden.

Die Verwendung der erfindungsgemäßen Stoffgemische in elektronischen Bauteilen ist unbekannt und aufgrund der variablen elektrischen und thermischen Eigenschaften dieser Systeme besonders vorteilhaft.

In bevorzugten Ausführungsformen der erfindungsgemäßen Stoffgemische besteht das Stoffgemisch neben der ionischen Flüssigkeit aus
a) 30 - 99 Gew.-% eines (Meth)acrylatcopolymeren, das durch tertiäre und/oder quaternäre Aminogruppen funktionalisiert ist, und
b) 70 - 1 Gew.% einer organischen Mono-, Di-, Tri- und/oder polyfunktionellen Carbonsäure oder
c) 30 - 90 Gew.-% eines (Meth)acrylatpolymeren, das durch Carboxylat und/oder Carboxylgruppen funktionalisiert ist, und
d) 70 - 1 Gew.-% einer organischen Mono-, Di-, Tri- und/oder polyfunktionellen Verbindungen mit tertiären bzw. quaternären Aminogruppen.

Das (Meth)acrylatpolymer kann - wie bereits ausgeführt - ein Polymer aus einem oder mehreren (Meth)acrylatbausteinen oder ein Copolymer aus diesen Bausteinen mit einem oder mehreren funktionalisierten olefinisch ungesättigten Monomeren sein.

Optional kann das erfindungsgemäße Stoffgemisch als Polymerblend zusätzlich zu den Komponenten a) und b) bzw. c) und d) 40 - 80 Gew.-%, bezogen auf die Summe von a) und b) bzw. c) und d), eines weichmachenden bzw. eines das Schmelz- und Fließverfahren beeinflussenden Agens e) enthalten.

### Aminfunktionalisierte Copolymerisate (a) :

Werden aminogruppenhaltige Monomere eingesetzt, so liegt deren Anteil des aminogruppenhaltigen Monomeren an dem Copolymeren, vorzugsweise bei 30 bis 80 Gew.-%. Bevorzugt sind als Komponente a) Ester und Amide der Acryl- und/oder Methacrylsäure, die in der Salzform die Struktur

CH₂=CR-CO-A-Alk-N⁺R'₃X⁻

haben, worin R ein Wasserstoffatom oder eine Alkylgruppe mit 1 - 12 Kohlenstoffatomen, vorzugsweise Methyl, A ein Sauerstoffatom oder eine Iminogruppe, vorzugsweise - NH - , Alk eine geradkettige oder verzweigte Alkylengruppe, vorzugsweise mit 2 bis 8 Kohlenstoffatomen, R' gleiche oder verschiedene organische Reste mit bis zu 22 Kohlenstoffatomen, insbesondere Alkyl-, Aryl- oder Aralkylreste bedeuten, wobei höchstens zwei der Reste R' Wasserstoffatome sind. X⁻ stellt das Säureanion dar, das für anionische organische Gruppe (R-COO-, R-SO₃⁻ ), Halogenide (F⁻, Br⁻, Cl⁻) oder SO₃²⁻,SO₄²⁻, CO₃ ²⁻ steht.

Geeignete aminogruppenhaltige Monomere für Komponente a) oder d) mit einer tert. Aminogruppe sind:
Dimethylaminoethyl-acrylat und -methacrylat,
Diethylaminoethyl-acrylat und -methacrylat,
Dibutylaminoethyl-acrylat und -methacrylat,
Morpholino-ethyl-acrylat und -methacrylat,
Piperidino-ethyl-acrylat und -methacrylat,
Dimethylamino-2-propyl-acrylat und -methacrylat,
Dimethylamino-neopentyl-acrylat und -methacrylat,
Dimethylaminoethyl-acrylamid und -methacrylamid,
Diethylaminoethyl-acrylamid und -methacrylamid,
Dibutylaminoethyl-acrylamid und -methacrylamid,
Morpholino-ethyl-acrylamid und -methacrylamid,
Piperidino-ethyl-acrylamid und -methacrylamid,
Dimethylammo-2-propyl-acrylamid und -methacrylamid,
Dimethylamino-neopentyl-acrylamid und -methacrylamid.

Auch Monomere mit mehreren Aminogruppen, wie z. B. Abkömmlinge des Polyethylenimins, sind wie auch Monomere, die eine oder mehrere quartäre Ammoniumgruppen tragen, geeignet.

Hierzu gehören z. B.
N,N-Dimethyl-N-(2-methacryloyloxyethyl)-aminoessigsäure-betain,
N,N-Dimethyl-N-(2-methacryloyl-aminopropyl)-aminoessigsäure-betain,
Acryl- und Methacryloxyethyl-trimethylammoniumchlorid,
Acryl- und Methacryloxyethyl-trimethylammoniummethosulfat,
Acryl- und Methacrylamido-ethyl-trimethylammoniumchlorid.
Da quartäre Ammoniumverbindungen mit Carbonsäureanionen schwer zugänglich sind, ist es beim Einsatz der letztgenannten Monomeren schwierig, von der weichmachenden Wirkung höherer Carbonsäureanionen Gebrauch zu machen.

Unter den Alkylestern der Acrylsäure und/oder Methacrylsäure sind diejenigen mit 4 bis 12 Kohlenstoffatomen im Alkylrest bevorzugt, vor allem die Ester der Acrylsäure. Insbesondere n-Butyl-, n-Hexyl-, n-Octyl-, 2-Ethylhexyl-, n-Decyl- und n-Dodecylacrylat sind gut geeignet. Die niederen Ester der Acryl- und/oder Methacrylsäure werden in der Regel nur als Comonomere neben den höheren Estern eingesetzt.

Bei der Festlegung des Anteils der amingruppenhaltigen Komponente ist die gewünschte Löslichkeit in Wasser zu beachten, andererseits für einem ausreichenden Anteil des weichmachenden Alkylacrylats oder -methacrylats zu sorgen. Wenn die zum Aufbau des Copolymeren verwendeten Monomeren bei keinem Mischungsverhältnis diese beiden Eigenschaften gleichzeitig erreichen lassen, kann ein Weichmacher, d. h. Komponente c) zu Hilfe genommen werden. Durch einen ausreichend hohen Anteil an amingruppenhaltigen Monomeren können z. B. wasserbasierende Bindersysteme hergestellt werden. Ist der Anteil der amingruppenhaltigen Monomere geringer gewählt, werden lösemittelbasierte Systeme erhalten.

Als Lösemittel für die lösemittelbasierten Systeme kommen einzelne Substanzen oder Gemische aus den Arten : Alkylalkohole (z.B.Ethanol, Isopropanol), Ketone (z.B. Aceton, MEK) oder andere leicht zu entfernende Solventien in Frage. Mitunter oder zum Teil können auch im System verbleibende Lösemittel verwendet werden, wie z.B. Diole (1,2- oder 1,3-Propandiol, Butandiol) oder andere polare Lösemittel wie z.B. Diglyme etc. Daneben können weitere Comonomere am Aufbau der Copolymeren beteiligt sein, sofern sie z.B. die Wasserlöslichkeit nicht unzulässiger Weise herabsetzen oder die Härte unzulässig erhöhen. Beispiele sind Acryl- und/oder Methacrylamid, Hydroxyalkylester und Polyalkylenglykolester der Acryl- und/oder Methacrylsäure, Ethylen, Vinylacetat, Vinylpropionat und Vinylpyrrolidon. Zur Herstellung brauchbarer Bindersysteme ist die Mitverwendung dieser Monomeren in der Regel nicht erforderlich; ihr Anteil liegt üblicherweise unter 20 Gew.-%.

Das Copolymer kann in der Salzform durch radikalische Copolymerisation der neutralisierten Amino-Monomeren mit den anderen Monomerbestandteilen in wässriger Lösung erzeugt werden. Es wird jedoch bevorzugt, zunächst das nicht neutralisierte Copolymer herzustellen, indem man anstelle der Monomeren mit einer Ammoniumsalzgruppe das zugrundeliegende Monomer in der Basenform einsetzt. Für die radikalische Polymerisation dieser Monomerengemische stehen verschiedene, seit langem bekannte Polymerisationsverfahren zur Verfügung, z.B. die Polymerisation in Wasser oder in organischen Lösungsmitteln, die Polymerisation in Substanz und, da die Copolymeren in der Basenform weniger wasserlöslich sind, auch die Emulsionspolymerisation in wässriger Phase, ferner durch "inverse Perlpolymerisation" in "organischer Phase". Die organischen Polymerisatlösungen und wässrigen Polymerisatdispersionen lassen sich z.B. durch Sprühtrocknung in Pulverprodukte überführen. Die Substanzpolymerisate werden im Extruder aufgeschmolzen und zu einem feinen Granulat verarbeitet.

Das Molekulargewicht des Copolymers beeinflusst die Viskosität der wässrigen oder lösemittelbasierten Lösung des Binders in Abhängigkeit von der Konzentration, bezogen auf den flüssigen Bestandteil. Es liegt vorzugsweise im Bereich zwischen 100 und 2,5 Millionen. Die Viskosität der wässrigen oder lösemittelbasierten Lösung des Copolymeren soll nicht mehr als 10.000 Pa · s, vorzugsweise 10 mPa · s bis 1.000 Pa · s betragen, wobei der Polymerisatgehalt der Lösung zweckmässig 20 bis 80 Gew.-% ausmacht.

Die Klebrigkeit des Copolymers beruht jedoch nicht allein auf seinem Gehalt an Alkylacrylaten oder -methacrylaten, sondern auch auf der Art des aminogruppenhaltigen Monomers. So fördert ein längerer Alkylrest bis zu einem Grenzwert von etwa 10 Kohlenstoffatomen als Bindeglied zwischen der ungesättigten polymerisierbaren Gruppe und der Aminogruppe die Weichheit des Copolymers. Alkylreste oberhalb dieses Grenzwertes mindern die Beweglichkeit der Polymerkette, an die sie gebunden sind und erhöhen dadurch die Härte.

Einen starken Einfluss auf die Weichheit übt das Säureanion aus, als dessen Salz das Copolymer vorliegt. Während die Anionen der Mineralsäuren und der niederen organischen Sulfonsäuren und Carbonsäuren eher die Härte des Copolymeren fördern, wurde auch festgestellt, dass sich die Anionen der höheren Carbonsäuren weichmachend auswirken. Dies gilt für Carbonsäuren mit wenigstens vier und besonders mit 8 bis 20 Kohlenstoffatomen. Bevorzugte Carbonsäuren dieser Gruppe sind Caprinsäure, Laurinsäure und Myristinsäure. Wenn mit diesen höheren Carbonsäuren nicht die erforderliche Wasserlöslichkeit erreicht wird, kann man ein Gemisch aus höheren und mittleren Carbonsäuren bzw. Dicarbonsäuren, wie z.B. Adipinsäure, einsetzen. Der Anteil der mittleren Carbonsäuren kann beispielsweise bis zu 30 Mol-% der anionischen Äquivalente ausmachen.

### Säurefunktionalisierte Copolymerisate (c) :

Es ist bekannt, dass die höheren Alkylester der Acryl- und/oder Methacrylsäure den daraus hergestellten Copolymeren Weichheit und Klebrigkeit verleihen. Gleichzeitig machen sie das Copolymer hydrophob und wasserunlöslich.

Bei der Festlegung des Anteils der monoethylenisch ungesättigten, radikalisch polymerisierbaren Carbonsäure ist daher die gewünschte Löslichkeit in Wasser zu beachten, andererseits für einen ausreichenden Anteil des weichmachenden Alkylacrylats oder -methacrylats zu sorgen. Wenn die zum Aufbau des Copolymeren verwendeten Monomeren bei keinem Mischungsverhältnis diese beiden Eigenschaften gleichzeitig erreichen lassen, kann ein Weichmacher, d. h. Komponente e) zu Hilfe genommen werden. Durch einen ausreichend hohen Anteil an radikalisch polymerisierbarer Carbonsäure können z. B. wasserbasierende Bindersysteme hergestellt werden. Ist der Carbonsäure-Anteil geringer gewählt, werden lösemittelbasierte Systeme erhalten.

Als Lösemittel für diese lösemittelbasierten Systeme kommen einzelne Substanzen oder Gemische aus den Arten : Alkylalkohole (z.B.Ethanol, Isopropanol), Ketone (z.B. Aceton, MEK) oder andere leicht zu entfernende Solventien in Frage. Mitunter oder zum Teil können auch im System verbleibende Lösemittel verwendet werden, wie z.B. Diole (1,2- oder 1,3-Propandiol, Butandiol) oder andere polare Lösemittel wie z.B. Diglyme etc.

Die monoethylenisch ungesättigte, radikalisch polymerisierbare Mono- oder Dicarbonsäure hat vorzugsweise die Struktur

R-CH = CR'-COOY

worin entweder R ein Wasserstoffatom oder eine Alkylgruppe mit 1-12 Kohlenstoffatomen und R' ein Wasserstoffatom, eine Methylgruppe oder eine Gruppe -CH₂-COOH oder R eine Gruppe -COOH und R' ein Wasserstoffatom bedeuten. Zu diesen Carbonsäuren gehören Acryl- und Methacrylsäure, Itacon-, Malein- und Fumarsäure. Der Anteil der monoethylenisch ungesättigten Mono- oder Dicarbonsäuren liegt vorzugsweise bei 30 - 80 Gew.-%, insbesondere bei 50 - 70 Gew.-% des Mischpolymerisats.

Es ist nicht grundsätzlich erforderlich, dass alle Carbonsäureeinheiten des Mischpolymerisats in der Salzform vorliegen, sondern es genügt ein Anteil, der die Wasserlöslichkeit gewährleistet. Der dafür erforderliche Anteil hängt von der Größe und Hydrophobie des Esteranteils ab. In manchen Fällen reicht ein Gehalt von 15 Gew.-% an Carboxylat-Einheiten schon aus, um das Mischpolymerisat wasserlöslich zu machen. In der Regel liegt der Gehalt an Carboxylat-Monomereinheiten bei 20 bis 50 Gew.-%.

Eine Wasserlöslichkeit des Polymerisats lässt sich durch eine Teilneutralisation der vorhandenen Carboxylgruppen erreichen, die je nach dem Gehalt an Carbonsäure-Monomereinheiten zwischen 20 und 50 Mol-% liegt. Für die praktische Anwendung werden Neutralisationsgrade von 20 bis 100, insbesondere 50 bis 100 Mol-% bevorzugt. Mittels des Neutralisationsgrades lassen sich die elektrischen Eigenschaften beeinflussen.

Als salzbildendes Kation Y sind neben H⁺ z.B. Alkalikationen, insbesondere Natrium und Kalium, zu nennen. Andere Metallkationen sind insoweit verwendbar, wie die durch Mehrwertigkeit vernetzende Wirkung gewünscht ist (dann eher als Vernetzungsagens). Organische Ammoniumkationen sind geeignet, wenn sie nicht beim Trocknen oder bei der Lagerung in Form des entsprechenden Amindampfes entweichen. Brauchbar sind z.B, quartäre Ammoniumkationen, wie Tetramethylammonium oder bevorzugt Ammoniumkationen, die sich von schwer flüchtigen Aminen, wie Diethanolamin oder Triethanolamin, Triisopropanolamin, Diethanolbutylamin u.ä. ableiten.

Unter den Alkylestern der Acrylsäure und/oder Methacrylsäure sind diejenigen mit 1 bis 12 Kohlenstoffatomen im Alkylrest bevorzugt, vor allem die Ester der Acrylsäure. Insbesondere Methyl-, Ethyl-, n-Butyl-, n-Hexyl-, n-Octyl-, 2-Ethylhexyl-, n-Decyl und n-Dodecylacrylat sind gut geeignet. Die niederen Ester der Acryl- und/oder Methacrylsäure werden in der Regel nur als Comonomere neben den höheren Estern eingesetzt. Daneben können weitere Comonomere am Aufbau des Copolymers beteiligt sein, sofern sie die gewünschte Wasserlöslichkeit nicht in unzulässiger Weise herabsetzen oder die Härte unzulässig erhöhen. Beispiele sind Acrylund/oder Methacrylamid, Hydroxyalkylester, ω-Methoxypolyalkylenglykolester und Polyalkylenglykolester der Acryl- und/oder Methacrylsäure, Ethylen, Vinylacetat, Vinylpropionat und Vinylpyrrolidon. Zur Herstellung von Bindern ist die Mitverwendung dieser Monomere in der Regel nicht erforderlich; ihr Anteil liegt üblicherweise unter 20 Gew.-%.

Das Copolymer kann in der Salzform durch radikalische Copolymerisation der neutralisierten Carbonsäure mit den anderen Monomerbestandteilen in wässriger Lösung erzeugt werden. Es wird jedoch bevorzugt, zunächst das nicht neutralisierte Copolymer herzustellen, indem man die freie Mono- oder Dicarbonsäure einsetzt. Für die radikalische Polymerisation dieser Monomerengemische stehen verschiedene, seit langem bekannte Polymerisationsverfahren zur Verfügung, z.B. die Polymerisation in Wasser oder in organischen Lösungsmitteln, die Polymerisation in Substanz und, da die Copolymeren in der Säureform weniger wasserlöslich sind, auch die Emulsionspolymerisation in wässriger Phase. Die organischen Polymerisatlösungen und wässrigen Polymerisatdispersionen lassen sich z.B. durch Sprühtrocknung in Pulverprodukte überführen. Die Substanzpolymerisate werden im Extruder aufgeschmolzen und zu einem feinen Granulat extrudiert.

Salzbildende Komponenten b) und d) :

Die mono-, di- oder polyfunktionelle Verbindungen dienen im Wechselspiel mit der Komponente a) bzw. c) durch die Erhöhung der Salzkonzentration die Einstellung bestimmter elektrischer Eigenschaften wie z.B. des spezifischen Widerstandes und zur Vernetzung und damit in Verbindung mit der Weichmacherkomponenten e) auch zur (Glaspunkt)-Tg-Einstellung.

Als monofunktionelle Verbindung b) können in Verbindung mit dem aminofunktionalisierten (Meth-)acrylatcopolymer a) z. B. kurzkettige Carbonsäuren wie Essigsäure, Milchsäure, Propionsäure oder auch Benzoesäure verwendet werden.

Für die Wechselwirkung der Komponenten a und b gilt daher: 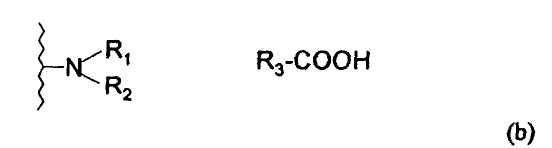 mit
- R¹, R² =: z.B. Methyl oder Ethyl
- R³ =: verzweigte oder unverzweigte Alkyl-, Hydroxyalkyl-, cycloaliphatische oder hydroxyfunktionalisierte Kohlenwasserstoffkette mit 1 bis 6 Kohlenstoffatomen

Als monofunktionelle Verbindung d) können in Verbindung mit den carboxylgruppenfunktionalisierten (Meth-)acrylatcopolymer c) z.B. kurzkettige Amine wie Triethanolamin, Diethanol-n-butylamin oder Triisopropanolamin verwendet werden.

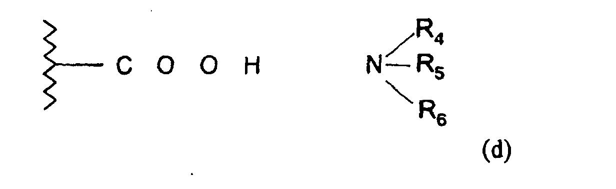

Mit R⁴, R⁵, R⁶ = H, verzweigte oder unverzweigte Alkyl-, Hydroxyalkyl-, cycloaliphatische oder hydroxyfunktionalisierte Kohlenwasserstoffkette mit 1 bis 6 Kohlenstoffatomen.

Als difunktionelle Verbindungen b) können bei dem aminofunktionalisierten (Meth)acrylatcopolymer a) z.B. Bernsteinsäure, Propandicarbonsäure, Adipinsäure, Dodecandisäure etc. verwendet werden. 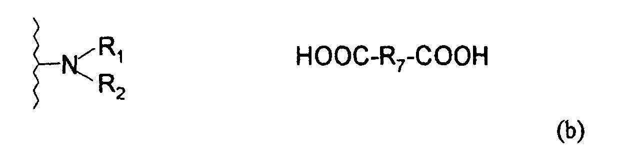 mit
- R¹, R² =: z.B. Methyl oder Ethyl
- R⁷ =: verzweigte oder unverzweigte Alkyl-, Hydroxyalkyl-, cycloaliphatische oder hydroxyfunktionalisierte Kohlenwasserstoffkette mit 1 bis 6 Kohlenstoffatomen

Als difunktionelle Verbindungen d) können bei dem carboxylgruppenfunktionalisierten (Meth-)acrylatcopolymer c) kurzkettige tertiäre Diamine wie z.B. N,N'-Dimethylethylendiamin, N,N,N',N'-Tetramethylethylendiamin, N,N,N',N'-Tetrakis(2-hydroxyethyl)ethylendiamin, N,N,N',N'-Tetrakis(2-hydroxyisopropyl)ethylendiamin eingesetzt werden. 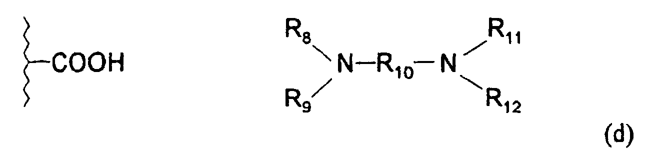 mit
- R⁸, R⁹, R¹⁰, R¹¹, R¹² =: unabhängig voneinander H, verzweigte oder unverzweigte Alkyl-, Hydroxyalkyl-, cycloaliphatischer oder hydroxyfunktionalisierte Kohlenwasserstoffkette mit 1 bis 6 Kohlenstoffatomen.

Als polyfunktionelle Verbindungen b) können bei dem aminofunktionalisierten (Meth-)acrylatcopolymer a) z. B. Polysäuren wie Polyacrylsäure, EUDRAGIT®L oder Polystyrolsulfonsäure, Polyamide, Polyacrylamide und entsprechende Copolymerisate verwendet werden.

Als polyfunktionelle Verbindungen d) können bei dem carboxylgruppenfunktionalisierten (Meth-)acrylatcopolymer c) z.B. Polyamine (PEI), Polyamide bzw. Polyethylenglykole, Poly(meth)acrylate, Polyacrylamide oder EUDRAGIT® E eingesetzt werden.

Bevorzugt werden für die Komponenten b) oder d) Propionsäure, Benzoesäure, Triethanolamin, Bernsteinsäure, Adipinsäure, Dodecandisäure, Polyacrylsäure, Polystyrolsulfonsäure, Polyamine (PEI), Polyamide oder Polyacrylamide, Citronensäurealkylester, Glycerinester, Phthalsäurealkylester, Sebacinsäurealkylester, Sucroseester, Sorbitanester, Dibutylsebacat und Polyethylenglykole, Triethylcitrat, Acetyltriethylcitrat, Poly(meth)acrylate, Copolymerisate aus Ethylacrylat und Methylmethacrylat, Copolymerisate von Methylmethacrylat mit Butyl(meth)acrylat und/oder 2-Ethylhexylmethacrylat oder Copolymerisate von Methylacrylat und Methylmethacrylat, N,N-Dimethyl-n-octylamin, N,N-Dimethyl-n-stearylamin, 1,4-Bis(dimethylamino)-Butan, aminoterminiertes Polyethylenoxid, endgruppen-carboxyl-funktionalisierte PEO-Systeme bzw. PEO-Dicarbonsäure-Oligomere und Polyester eingesetzt.

### Komponente e)

Als Weichmacher gemäß Komponente e) für die aminofunktionalisierten (Meth)acrylatcopolymere a) und für die carboxylgruppenfunktionalisierten (Meth-)acrylatcopolymere d) geeignete Stoffe können in die folgenden Gruppen eingeteilt werden :
1. Verbindungen ohne freie funktionelle Gruppen, die mit den funktionellen Gruppen der Komponente a) reagieren könnten : diese haben in der Regel ein Molekulargewicht zwischen 100 und 20000 und enthalten eine oder mehrere hydrophile Gruppen im Molekül, z.B. Hydroxyl-, Ether- oder Estergruppen. Beispiele geeigneter Weichmacher sind Citronensäurealkylester, Glycerinester, Phthalsäurealkylester, Sebacinsäurealkylester, Sucroseester, Sorbitanester, Dibutylsebacat und Polyethylenglykole von 4000 bis 20000 Dalton. Bevorzugte Weichmacher sind z.B. Triethylcitrat und Acetyltriethylcitrat.
2. Poly(meth)acrylate ohne oder nur mit unerheblichen Mengen an funktionellen Gruppen, deren dynamische Glastemperaturen nach DIN 53445 im Bereich von -70 bis etwa 80 °C liegen. Beispiele für solche Polymere sind Copolymerisate aus Ethylacrylat und Methylmethacrylat, vorzugsweise mit mehr als 30 Gew.-% Ethylacrylat, oder Copolymerisate von Methylmethacrylat mit Butyl(meth)acrylat und/oder 2-Ethylhexylmethacrylat oder Copolymerisate von Methylacrylat und Methylmethacrylat. Für die Erzeugung der Wasserlöslichkeit können weitere Monomere wie z.B. Hydroxyalkylester und Polyalkylenglykolester der Acryl- und/oder Methacrylsäure und Vinylpyrrolidon einpolymerisiert sein.
3. Verbindungen ohne freie funktionelle Gruppen, die mit den funktionellen Gruppen der Komponente a) reagieren könnten : diese haben in der Regel ein Molekulargewicht zwischen 100 und 20000 g/mol und enthalten eine oder mehrere lipophile Gruppen im Molekül, z.B. Ester- oder Ethergruppen. Beispiele geeigneter Weichmacher sind Citronensäurealkylester, Glycerinester, Phthalsäurealkylester, Sebacinsäurealkylester, Sucroseester, Sorbitanester, Dibutylsebacat und Polyethylenglykole von 4000 bis 20000 Dalton. Bevorzugte Weichmacher sind z.B. Triethylcitrat und Acetyltriethylcitrat.
4. Poly(meth)acrylate ohne oder nur mit unerheblichen Mengen an funktionellen Gruppen, deren dynamische Glastemperaturen nach DIN 53445 im Bereich von -70 bis etwa 80 °C liegen. Beispiele für solche Polymere sind Copolymerisate aus Ethylacrylat und Methylmethacrylat, vorzugsweise mit mehr als 30 Gew.-% Ethylacrylat, oder Copolymerisate von Methylmethacrylat mit Hutyl(meth)acrylat und/oder 2-Ethylhexylmethacrylat oder Copolymerisate von Methylacrylat und Methylmethacrylat.
5. Mono-, Di- oder polyfunktionelle Verbindungen, die neben der funktionellen Gruppe, die mit einer komplementären Gruppe der aminofunktionalisierten (Meth-)acrylatcopolymere a) eine salzbildende Reaktion eingehen kann, noch zudem eine längere aliphatische Struktureinheit aufweist, und gleichzeitig wassergängig sind. Entsprechende salzbildende Carbonsäuren in DE 39 24 393 beschrieben.
6. Mono-, Di- oder polyfunktionelle Verbindungen, die neben der funktionellen Gruppe, die mit einer komplementären Gruppe der aminofunktionalisierten (Meth-)acrylatcopolymere a) eine salzbildende Reaktion eingehen kann, noch zudem eine längere aliphatische Struktureinheit aufweist, einen lipophilen Charakter haben. Entsprechende salzbildende Carbonsäuren sind in DE 39 24 393 beschrieben.
7. Mono-, Di- oder polyfunktionelle Verbindungen, die neben der funktionellen Gruppe, die mit einer komplementären Gruppe der carboxylgruppenfunktionalisierten (Meth-)acrylatcopolymere c) eine salzbildende Reaktion eingehen kann, zudem eine längere aliphatische Struktureinheit aufweisen, und gleichzeitig wassergängig sind. Salzbildende Amine sind in DE 39 13 734 beschrieben, weiterhin können tertiäre Amine mit einer max. zwei langen Alkylketten (> C6) eingesetzt werden: z. B. N,N-Dihydroxyethyl-n-octylamin, N,N- Dihydroxyethyl-n-stearylamin, N,N'-Dihydroxyethyl-n-dodecylamin. Langkettige Tetra-2-hydroxyethyl- oder Tetra-2-hydroxypropyl-Diamine können ebenfalls verwendet werden. Kurzkettige difunktionelle Tetrahydroxyethyl- oder Tetra-2-hydroxypropyl-Diamine haben eher einen versteifenden Charakter, als einen weichmachenden Effekt.
8. Mono-, Di- oder polyfunktionelle Verbindungen, die neben der funktionellen Gruppe, die mit einer komplementären Gruppe der carboxylgruppenfunktionalisierten (Meth-)acrylatcopolymere c) eine salzbildende Reaktion eingehen kann, zudem eine längere aliphatische Struktureinheit aufweisen und einen lipophilen Charakter haben. Salzbildende Amine sind in DE 39 13 734 beschrieben, weiterhin können tertiäre Amine mit einer Alkylkette (> C6) eingesetzt werden: z. B. N,N-Dimethyl-n-octylamin, N,N-Dimethyl-nstearylamin, N,N'-Dimethyl-n-dodecylamin. Langkettige Tetramethyl-, Tetraethyl- oder Tetrapropyl-Diamine können ebenfalls verwendet werden. Kurzkettige difunktionelle Tetramethyl-Diamine wie z.B. 1,4-Bis(dimethylamino)-Butan haben eher einen versteifenden Charakter, als einen weichmachenden Effekt.
9. Für wasserbasierende Systeme sind wasserlösliche, salzbildende Weichmacher wie endgruppen-carboxyl-funktionalisierte Polyethylenoxid-(PEO)-Systeme bzw. PEO-Dicarbonsäure-Oligo- und Polyester, die mit der komplementären Gruppe der aminofunktionalisierten (Meth-)acrylatcopolymere a) eine salzbildende Reaktion eingehen, einsetzbar.
10. Für wasserbasierende Systeme sind wasserlösliche, salzbildende Weichmacher wie aminoterminiertes Polyethylenoxid (z.B. Jeffamine (DuPont)), die mit der komplementären Gruppe der carboxylgruppenfunktionalisierten (Meth-)acrylatcopolymere c) eine salzbildende Reaktion eingehen, einsetzbar.
11. Komplex zusammengesetzte hydrophile Systeme wie z.B. das Umsetzungsprodukt aus entweder einem Überschuß einer oder mehrerer Dicarbonsäure(n) und einem oder mehreren, ggf. hydroxyfunktionalisierten, tertiären Monoamin(en) mit langen aliphatischen oder cycloaliphatischen Resten oder aus einem Überschuß einer oder mehrerer Dicarbonsäure(n) und einem oder mehreren, ggf hydroxyfunktionalisierten, tertiären Diamine(n) mit langen Mittelsegmenten aus Alkylenresten oder PEO für die Gruppe der aminofunktionalisierten (Meth-)acrylatcopolymere a).
12. Komplex zusammengesetzte hydrophile Systeme wie z.B. das Umsetzungsprodukt aus entweder einem Überschuß von einem oder mehreren, ggf. hydroxyfunktionalisierten, tertiären Diamin(en) und einer oder mehreren Monocarbonsäure(n) mit langem Alkylrest, oder aus einem Überschuß von einem oder mehreren, ggf hydroxyfunktionalisierten, tertiären Diamine(n) und aus einer oder mehreren Dicarbonsäure(n) mit langen Mittelsegmenten aus Alkylenresten oder PEO für die carboxylgruppenfunktionalisierten (Meth-)acrylatcopolymere c)
13. Komplex zusammengesetzte lipophile Systeme wie z.B. das Umsetzungsprodukt aus entweder einem Überschuß einer oder mehrerer Dicarbonsäure(n) und einem oder mehreren, ggf. hydroxyfunktionalisierten, tertiären Monoamin(en) mit langen aliphatischen oder cycloaliphatischen Resten oder aus einem Überschuß einer oder mehrerer Dicarbonsäure(n) und einem oder mehreren, tertiären Diamine(n) mit langen Mittelsegmenten aus Alkylenresten für die Gruppe der aminofunktionalisierten (Meth-)acrylatcopolymere a).
14. Komplex zusammengesetzte lipophile Systeme wie z.B. das Umsetzungsprodukt aus entweder einem Überschuß von einem oder mehreren tertiären Diamin(en) und einer oder mehreren Monocarbonsäure(n) mit langem Alkylrest, oder aus einem Überschuß von einem oder mehreren tertiären Diamine(n) und aus einer oder mehreren Dicarbonsäure(n) mit langen Mittelsegmenten aus Alkylenresten für die carboxylgruppenfunktionalisierten (Meth-)acrylatcopolymere c).

## Patentansprüche

1. Stoffgemisch, enthaltend ein oder mehrere durch Sulfonat-, Carboxylat- oder quartäre Aminogruppen funktionalisierte (Meth)acrylatpolymere und eine ionische Flüssigkeit, wobei als ionische Flüssigkeit ein Salz mit einem Kation, ausgewählt aus der Gruppe Imidazolium-Ion, Pyridinium-Ion oder Ammonium-Ion gemäß den nachfolgenden Strukturen, 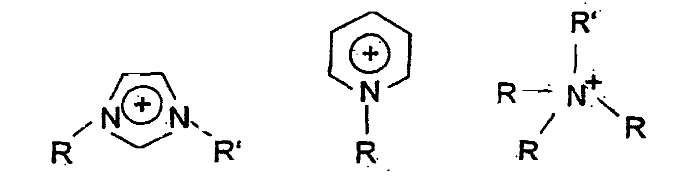 wobei R, R' = H, gleiche oder unterschiedliche Alkyl-, Olefin- oder Aryl-Gruppen mit der Maßgabe, dass R und R' unterschiedliche Bedeutungen besitzen und einem Anion aus der Gruppe der BF₄⁻-Ionen, Alkyl-Borat-Ionen; BEt₃Hex-Ionen mit Et = Ethyl-Gruppe und Hex = Hexyl-Gruppe, Halogeno-Phosphat-Ionen, PF₆⁻-Ionen, Nitrat-Ionen, Sulfonat-Ionen, Alkyl- bzw. Aryl-Sulfonat-Ionen, Hydrogensulfat-Ionen, Chloroaluminat-Ionen, oder ein Salz mit einem Kation ausgewählt aus Phosphonium-Ion gemäß der nachfolgenden Struktur 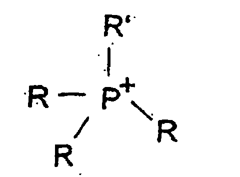 wobei R, R' = H, gleiche oder unterschiedliche Alkyl-, Olefin- oder Aryl-Gruppen mit der Maßgabe, dass R und R' unterschiedliche Bedeutungen besitzen und einem Anion aus der Gruppe der BF₄⁻-Ionen, Alkyl-Borat-Ionen, BEt₃Hex-Ionen mit Et = Ethyl-Gruppe und Hex = Hexyl-Gruppe, Halogeno-Phosphat-Ionen, PF₆⁻ -Ionen, Nitrat-Ionen, Hydrogensulfat-Ionen, Chloroaluminat-Ionen, eingesetzt wird.

2. Stoffgemisch nach Anspruch 1,
**dadurch gekennzeichnet,**
**dass** das (Meth)acrylatpolymer ein Copolymer aus mindestens einem (Meth)acrylatmonomer und mindestens einem olefinisch ungesättigten Monomeren ist.

3. Stoffgemisch nach einem der Ansprüche 1 oder 2,
**dadurch gekennzeichnet,**
**dass** durch quartäre Aminogruppen funktionalisierte (Meth)acrylatpolymer durch Umsetzen eines durch tertiäre Aminogruppen funktionalisierten (Meth)acrylatpolymers mit einer Säure erhalten wird.

4. Stoffgemisch nach einem der Ansprüche 2 oder 3,
**dadurch gekennzeichnet,**
**dass** das olefinisch ungesättigte Monomer durch tertiäre Aminogruppen funktionalisiert ist.

5. Stoffgemisch nach einem der Ansprüche 3 oder 4,
**dadurch gekennzeichnet,**
**dass** durch quartäre Aminogruppen funktionalisierte (Meth)acrylatpolymer durch Umsetzen eines durch tertiäre Aminogruppen funktionalisierten (Meth)acrylatpolymers mit einer organischen Mono-, Di-, Tri- oder polyfunktionellen Carbonsäure erhalten wird.

6. Stoffgemisch nach einem der Ansprüche 1 oder 2,
**dadurch gekennzeichnet,**
**dass** das durch Carboxylatgruppen funktionalisierte (Meth)acrylatpolymer durch Umsetzen eines durch Carboxylgruppen funktionalisierten (Meth)acrylatpolymers mit einem Amin enthalten wird.

7. Stoffgemisch nach Anspruch 6,
**dadurch gekennzeichnet,**
**dass** das olefinisch ungesättigte Monomer durch Carboxylatgruppen funktionalisiert ist.

8. Stoffgemisch nach einem der Ansprüche 6 oder 7,
**dadurch gekennzeichnet,**
**dass** durch Carboxylatgruppen funktionalisierte (Meth)acrylatpolymer durch Umsetzen eines durch Carboxylgruppen, funktionalisierten (Meth)acrylatpolymeren mit einer organischen Mono-, Di-, Tri- oder polyfunktionellen Aminverbindung erhalten wird.

9. Stoffgemisch nach einem der Ansprüche 6 bis 8,
**dadurch gekennzeichnet,**
**dass** das durch Sulfonatgruppen funktionalisierte (Meth)acrylatpolymer durch Umsetzen eines durch Sulfonsäuregruppen funktionalisierten (Meth)acrylatpolymers mit einem Amin enthalten wird.

10. Stoffgemisch nach Anspruch 9,
**dadurch gekennzeichnet,**
**dass** das olefinisch ungesättigte Monomer durch Sulfonsäuregruppen funktionalisiert ist.

11. Stoffgemisch nach einem der Ansprüche 9 oder 10,
**dadurch gekennzeichnet,**
**dass** durch Sulfonatgruppen funktionalisierte (Meth)acrylatpolymer durch Umsetzen eines durch Sulfonsäuregruppen funktionalisierten (Meth)acrylatpolymeren mit einer organischen Mono-, Di-, Tri- oder polyfunktionellen Aminverbindung erhalten wird.

12. Verwendung eines Stoffgemisches nach einem der Ansprüche 1 bis 11 in elektrischen und elektronischen Bauteilen.

13. Verwendung eines Stoffgemisches nach einem der Ansprüche 1 bis 11 für die Extrusionsverarbeitung von Polymeren.

14. Verwendung eines Stoffgemisches nach einem der Ansprüche 1 bis 11 in der Spritzgussverarbeitung von Polymeren.

## Claims

1. A mixture comprising one or more (meth)acrylate polymers functionalized by sulphonate, carboxylate or quaternary amino groups and an ionic liquid, a salt having a cation selected from the group consisting of imidazolium ions, pyridinium ions and ammonium ions of the following structures, 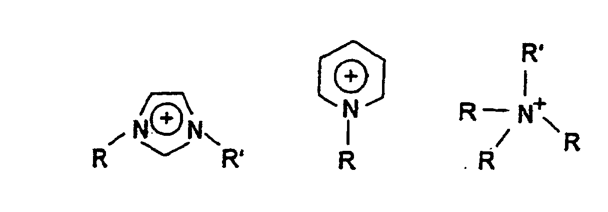 where R, R' = H, identical or different alkyl, olefin or aryl groups, with the proviso that R and R' are different, and an anion selected from the group consisting of BF₄⁻ ions, alkylborate ions, BEt₃Hex ions where Et = an ethyl group and Hex = a hexyl group, halophosphate ions, PF₆⁻ ions, nitrate ions, sulphonate ions, alkylsulphonate and arylsulphonate ions, hydrogensulphate ions and chloroaluminate ions,
or a salt having a cation selected from among phosphonium ions of the following structure 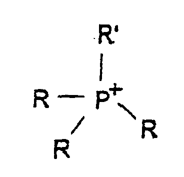 where R, R' = H, identical or different alkyl, olefin or aryl groups, with the proviso that R and R' are different, and an anion selected from the group consisting of BF₄⁻ ions, alkylborate ions, BEt₃Hex ions where ET = an ethyl group and Hex = a hexyl group, halophosphate ions, PF₆⁻ ions, nitrate ions, hydrogensulphate ions and chloroaluminate ions, being used as ionic liquid.

2. A mixture according to claim 1 **characterized in that** the (meth)acrylate polymer is a copolymer of at least one (meth)acrylate monomer and at least one olefinically unsaturated monomer.

3. A mixture according to any one of claims 1 and 2, **characterized in that** the (meth)acrylate polymer functionalized by quaternary amino groups is obtained by reacting a (meth)acrylate polymer functionalized by tertiary amino groups with an acid.

4. A mixture according to any one of claims 2 or 3, **characterized in that** the olefinically unsaturated monomer is functionalized by tertiary amino groups.

5. A mixture according to any one of claims 3 or 4, **characterized in that** the (meth)acrylate polymer functionalized by quaternary amino groups is obtained by reacting a (meth)acrylate polymer functionalized by tertiary amino groups with an organic monofunctional, bifunctional, trifunctional or polyfunctional carboxylic acid.

6. A mixture according to any one of claims 1 or 2, **characterized in that** the (meth)acrylate polymer functionalized by carboxylate groups is obtained by reacting a (meth)acrylate polymer functionalized by carboxyl groups with an amine.

7. A mixture according to claim 6, **characterized in that** the olefinically unsaturated monomer is functionalized by carboxylate groups.

8. A mixture according to any one of claims 6 or 7, **characterized in that** the (meth)acrylate polymer functionalized by carboxylate groups is obtained by reacting a (meth)acrylate polymer functionalized by carboxyl groups with an organic monofunctional, bifunctional, trifunctional or polyfunctional amine compound.

9. A mixture according to any one of claims 6 to 8, **characterized in that** the (meth)acrylate polymer functionalized by sulphonate groups is obtained by reacting a (meth)acrylate polymer functionalized by sulphonic acid groups with an amine.

10. A mixture according to claim 9, **characterized in that** the olefinically unsaturated monomer is functionalized by sulphonic acid groups.

11. A mixture according to any one of claims 9 or 10, **characterized in that** the (meth)acrylate polymer functionalized by sulphonate groups is obtained by reacting a (meth)acrylate polymer functionalized by sulphonic acid groups with an organic monofunctional, bifunctional, trifunctional or polyfunctional amine compound.

12. The use of a mixture according to any one of claims 1 to 11 in electrical and electronic components.

13. The use of a mixture according to any one of claims 1 to 11 for the processing of polymers by extrusion.

14. The use of a mixture according to any one of claims 1 to 11 in the processing of polymers by infection moulding.

## Revendications

1. Mélanges de substances contenant un ou plusieurs polymères de (méth)acrylate fonctionnalisés par des groupes sulfonate, carboxylate ou amino quaternaires et un liquide ionique, le liquide ionique utilisé étant un sel comportant un cation, choisi dans le groupe ion imidazolium, ion pyridinium ou ion ammonium selon les structures suivantes 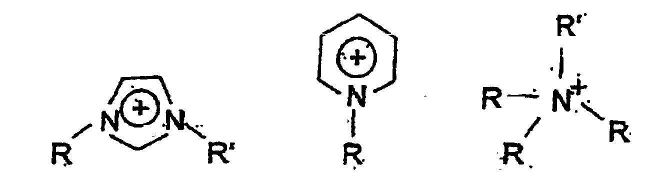 dans lesquelles R, R' = H, des groupes alkyle, oléfine ou aryle identiques ou différents à condition que R et R' aient des significations différentes, et comportant un anion du groupe des ions BF₄⁻, des ions borate d'alkyle, des ions de BEt₃-Hex avec Et = groupe éthyle et Hex = groupe hexyle, des ions halogénophosphate, des ions PF₆⁻, des ions nitrate, des ions sulfonate, des ions de sulfonate d'alkyle respectivement d'aryle, des ions sulfate d'hydrogène, des ions chloroaluminate,
ou bien un sel comportant un cation choisi parmi les ions phosphonium d'après la structure suivante 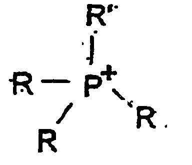 dans laquelle R, R' = H, des groupes alkyle, oléfine ou aryle identiques ou différents à condition que R et R' aient des significations différentes, et comportant un anion du groupe des ions BF₄⁻, des ions borate d'alkyle, des ions BEt₃-Hex avec Et = groupe éthyle et Hex = groupe hexyle, des ions halogénophosphate, des ions PF₆⁻, des ions nitrate, des ions sulfate d'hydrogène, des ions chloroaluminate.

2. Mélange de substances selon la revendication 1,
**caractérisé en ce que**
le polymère (méth)acrylate est un copolymère d'au moins un monomère (méth)acrylate et d'au moins un monomère oléfiniquement insaturé.

3. Mélange de substances selon l'une quelconque des revendications 1 ou 2,
**caractérisé en ce qu'**
on obtient un polymère (méth)acrylate fonctionnalisé par des groupes amino quaternaires par conversion d'un polymère (méth)acrylate, fonctionnalisé par des groupes amino tertiaires, avec un acide.

4. Mélange de substances selon l'une quelconque des revendications 2 ou 3,
**caractérisé en ce que**
le monomère oléfiniquement insaturé est fonctionnalisé par des groupes amino tertiaires.

5. Mélange de substances selon l'une quelconque des revendications 3 ou 4,
**caractérisé en ce qu'**
on obtient un polymère (méth)acrylate fonctionnalisé par des groupes amino quaternaires par conversion d'un polymère (méth)acrylate, fonctionnalisé avec des groupes amino tertiaires, avec un acide carboxylique organique mono-, di-, tri- ou polyfonctionnel.

6. Mélange de substances selon l'une quelconque des revendications 1 ou 2,
**caractérisé en ce qu'**
on obtient le polymère (méth)acrylate fonctionnalisé par des groupes carboxylate par conversion d'un polymère (méth)acrylate, fonctionnalisé par des groupes carboxyle, avec une amine.

7. Mélange de substances selon la revendication 6,
**caractérisé en ce que**
le monomère oléfiniquement insaturé est fonctionnalisé par des groupes carboxylate.

8. Mélange de substances selon l'une quelconque des revendications 6 ou 7,
**caractérisé en ce qu'**
on obtient le polymère (méth)acrylate fonctionnalisé par des groupes carboxylate par conversion d'un polymère (méth)acrylate, fonctionnalisé par des groupes carboxyle, avec un composé d'amines organiques mono, di, tri ou polyfonctionnelles.

9. Mélange de substances selon l'une quelconque des revendications 6 ou 8,
**caractérisé en ce qu'**
on obtient le polymère (méth)acrylate fonctionnalisé par des groupes sulfonate par conversion d'un polymère (méth)acrylate, fonctionnalisé par des groupes acide sulfonique, avec une amine.

10. Mélange de substances selon la revendication 9,
**caractérisé en ce que**
le monomère oléfiniquement insaturé est fonctionnalisé par des groupes acide sulfonique.

11. Mélange de substances selon l'une quelconque des revendications 9 ou 10,
**caractérisé en ce qu'**
on obtient le polymère (méth)acrylate fonctionnalisé par des groupes sulfonate par conversion d'un polymère (méth)acrylate, fonctionnalisé par des groupes acide sulfonique, avec un composé d'amines organiques mono, di, tri ou polyfonctionnelles.

12. Utilisation d'un mélange de substances selon l'une quelconque des revendications 1 à 11, dans des composants électriques et électroniques.

13. Utilisation d'un mélange de substances selon l'une quelconque des revendications 1 à 11, pour la transformation de polymères par extrusion.

14. Utilisation d'un mélange de substances selon l'une quelconque des revendications 1 à 11, pour la transformation de polymères par moulage par injection.
